Europäisches Patentamt

European Patent Office

Office européen des brevets

(11) Veröffentlichungsnummer: **0 287 780**
**A2**

(12) **EUROPÄISCHE PATENTANMELDUNG**

(21) Anmeldenummer: **88102909.4**

(22) Anmeldetag: **26.02.88**

(51) Int. Cl.4 **A47J 31/057**

(30) Priorität: **24.04.87 DE 8705964 U**

(43) Veröffentlichungstag der Anmeldung:
**26.10.88 Patentblatt 88/43**

(84) Benannte Vertragsstaaten:
**CH FR GB IT LI NL SE**

(71) Anmelder: **ROBERT KRUPS STIFTUNG & CO. KG.**
**Heresbachstrasse 29**
**D-5650 Solingen 19(DE)**

(72) Erfinder: **Henn, Stefan**
**Wieden 29**
**D-5650 Solingen(DE)**
Erfinder: **Maass, Rudolf**
**Sperlingsweg 45**
**D-5650 Solingen(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Gerät zum Bereiten heisser Getränke wie Kaffee, Tee od. dgl.**

(57) Es handelt sich im ein Gerät zum Bereiten heißer Getränke, wie Kaffee, Tee od.dgl.. In dem Gehäuse des Gerätes sind untergebracht und gelagert ein Frischwasserbehälter, eine elektrische Heizeinrichtung für das Wasser und ein Steigrohr zum Weiterleiten des erhitzten Wassers. An dem einen Ende des Steigrohres ist eine Verteileinrichtung angeordnet, die eine Schnappscheibe aufweist, die beim Erreichen der gewünschten Wassertemperatur selbsttätig aus einer das Wasser in den Frischwasserbehälter zurückführenden Sperrlage in eine den Weg zum Filter freigebende Öffnungslage überführbar ist. Das Gerät hat ferner einen Filter zur Aufnahme einer Filtertüte od.dgl. für das Kaffeemehl, den Tee od.dgl. Unter diesem Filter ist ein Auffanggefäß angeordnet. Die als Verteilerkammer ausgebildete Verteileinrichtung ist zusammengesetzt aus einer Vorlaufkammer und einer Rücklaufkammer, die zwischen sich die in ihrer Mitte eingespannte Schnappscheibe aufnehmen. Dabei ist bevorzugt vorgesehen, daß das Verbindungsmittel für die Vorlaufkammer und die Rücklaufkammer zugleich auch die Schnappscheibe in ihrer Mitte festhält.

FIG. 1

# Gerät zum Bereiten heißer Getränke, wie Kaffee, Tee od.dgl.

Die Erfindung bezieht sich auf Gerät zum Bereiten heißer Getränke, wie Kaffee, Tee od.dgl. mit einem Gehäuse zur Unterbringung oder Lagerung eines Frischwasserbehälters, einer elektrischen Heizeinrichtung für das Wasser, einem Steigrohr zum Weiterleiten des erhitzten Wassers, an dessen Ende eine Verteilerinrichtung angeordnet ist, die eine Schnappscheibe aufweist, die selbsttätig beim Erreichen der gewünschten Wassertemperatur aus einer das Wasser in den Frischwasserbehälter zurückführenden Sperrlage in eine den Weg zum Filter freigebende Öffnungslage überführbar ist sowie mit einem Filter und einem darunter angeordneten Auffanggefäß.

Derartige Ausführungsformen von Geräten zum Bereiten heißer Getränke, wie Kaffee, Tee od.dgl. sind bekannt. Sie haben den grundsätzlichen Vorteil, daß durch die Verteileinrichtung und die in dieser angeordneten Schnappscheibe mit Sicherheit verhindert wird, daß zu kaltes Wasser in den Filterbereich und damit in den Bereich des darin befindlichen Kaffeemehles gelangt. Dadurch wird somit ausgeschaltet, daß der Benutzer Kaffee, Tee od.dgl. erhält, welcher nicht die erstrebte Temperatur aufweist. Die Schnappscheibe in der Verteileinrichtung gibt nämlich den Weg des im Steigrohr aufsteigenden Wassers zum Kaffeemehl erst dann frei, wenn die gewünschte Betriebstemperatur erreicht ist. Auf der anderen Seite haben bekannte Ausführungsformen solcher Geräte noch Nachteile, insbesondere ist die Ausbildung der Verteileinrichtung verhältnismäßig aufwendig. Dies gilt auch für die Lagerung oder allgemein für die Anordnung der Schnappscheibe in der Verteileinrichtung, die in aller Regel einseitig eingespannt ist.

Der Erfindung liegt die Aufgabe zugrunde, Geräte zum Bereiten heißer Getränke, wie Kaffee, Tee od.dgl. der eingangs näher gekennzeichneten Art unter Beibehaltung der angeführten Vorteile bekannter Ausführungsformen weiter zu verbessern, insbesondere soll die Ausbildung der Verteileinrichtung selbst und die Anordnung der Schnappscheibe in der Verteileinrichtung verbessert werden. Es soll dabei insbesondere eine wirtschaftliche Herstellung der Verteileinrichtung als solcher und der Befestigung der Schnappscheibe in der Verteileinrichtung er-möglicht werden.

Dieses Ziel ist erfindungsgemäß dadurch erreicht, daß die als Verteilerkammer ausgebildete Verteileinrichtung aus einer Vorlaufkammer und einer Rücklaufkammer zusammengesetzt ist, die zwischen sich die in ihrer Mitte eingespannte Schnappscheibe aufnehmen.

Die erfindungsgemäße Ausbildung der Verteileinrichtung hat gegenüber dem Bekannten erhebliche Vorteile. So lassen sich die beiden Teile der Verteilerkammer jeweils einstückig in einem Arbeitsgang herstellen und dann derart zusammenfügen, daß sie zugleich die Schnappscheibe zwischen sich einschließen und zwar derart, daß diese nicht einseitig - wie bisher - festgespannt wird sondern in ihrer Mitte festgehalten wird.

Bei der bevorzugten Ausführungsform der Erfindung ist vorgesehen, daß das Verbindungsmittel für die Vorlaufkammer und die Rücklaufkammer zugleich auch die Schnappscheibe in ihrer Mitte festhält.

Dabei empfiehlt es sich, als Verbindungsmittel eine Verbindungsschraube zu benutzen, deren Schaft eine Durchbrechung der Vorlaufkammer durchgreift und die mit ihrem freien Ende mit den Begrenzungswandungen eines Sackloches einer Verdickung der Rücklaufkammer zusammenwirkt und daß die Schnappscheibe auf einem Lager an der inneren Stirnfläche der Verdickung angeordnet ist. Beim Zusammenfügen der Einzelteile der Verteilerkammer braucht die Schnappscheibe daher nur auf das Lager an der inneren Stirnfläche der Verdickung angebracht zu werden, danach kann die Verbindung zwischen der Vorlauf-und der Rücklaufkammer über die Verbindungsschraube erfolgen.

Es empfiehlt sich, sowohl die Vorlaufkammer als auch die Rücklaufkammer auf ihren einander zugekehrten Innenwandungen je einen umlaufenden Vorsprung aufweisen zu lassen, die als Anschläge für benachbarte Wandungen der Schnappscheibe benutzbar sind. Diese Vorsprünge können den Wandungen der Vorlauf-und auch der Rücklaufkammer bei der Herstellung unmittelbar angeformt werden.

Es empfiehlt sich, den Grundkörper der Vorlaufkammer einen im wesentlichen umlaufenden Rand mit einem Rücksprung aufweisen zu lassen, in den unter Zwischenschaltung einer Dichtung der umlaufende Rand der Rücklaufkammer eingreift. Auf diese Weise läßt sich in einfacher Weise eine Abdichtung der äußeren Trennfuge zwischen der Vorlauf-und der Rücklaufkammer erreichen.

Die Rücklaufkammer weist zweckmäßig im Bereich ihres Grundkörpers zum Frischwasserbehälter der Kaffeemaschine hin offene Rücklaufdurchbrüche auf, die vorzugsweise konzentrisch zur Verbindungsschraube angeordnet sind. Derartige Durchbrüche lassen sich in einfacher Weise bei der Herstellung der Rücklaufkammer erzeugen. Sie können in ihren Abmessungen so groß gehalten werden, daß das über das Steigrohr einströmende, noch zu kalte Wasser ohne Schwierigkeiten zurück in den Frischwasserbehälter gelangt.

Dabei empfiehlt es sich, eine Mehrzahl von Rücklaufdurchbrüchen vorzusehen, die auf einem Teilkreisbogen um die Verbindungsschraube herum angeordnet sind, wobei diese vorzugsweise bei gleicher Breite unterschiedlich lang bemessen sind.

Nach einem weiteren Vorschlag der Erfindung weist die Vorlaufkammer auf der Außenseite ihres Grundkörpers einen mit einer durchlaufenden Bohrung versehenen Anschlußstutzen auf, der unter Zwischenschaltung einer Dichtung mit dem in den Bereich des Filters führenden Querrohr verbindbar ist. Der Anschlußstutzen wird dabei der Vorlaufkammer unmittelbar angeformt.

Ferner empfiehlt es sich, daß sowohl die Vorlaufkammer als auch die Rücklaufkammer je einen angeformten Halbstutzen aufweisen, die sich beim Zusammensetzen dieser beiden Kammern zur Verteilerkammer zu einem Vollstutzen ergänzen, der mit dem freien Ende des Steigrohres verbindbar ist.

Ferner ist es zweckmäßig, wenn im Endbereich jedes Halbstutzens an den Innenwandungen liegend jeweils ein in den Innenraum vorragender und im bezug auf die Längsachse der Halbstutzen quergestellter Anschlag und Leitwand angeordnet ist.

Auf der Zeichnung ist die die Erfindung in einem Ausführungsbeispiel dargestellt und zwar zeigen:

Fig. 1 im Längsschnitt, teilweise in Ansicht, ein Gerät zum Bereiten heißer Getränke, wie Kaffee od.dgl., mit einem Filtereinsatz in dem Filter und mit einer Tasse als Auffanggefäß,

Fig. 2 im Längsschnitt und im vergrößerten Maßstab den zum Einsetzen in den Filter des Gerätes nach der Fig. 1 bestimmten Filtereinsatz bei abgenommenen Überlaufkappen,

Fig. 3 in Draufsicht den Filtereinsatz gemäß der Fig. 3 der Zeichnung,

Fig. 4 im Teilschnitt und im nochmals vergrößerten Maßstab einen Teilbereich des Filtereinsatzes mit einem seinem Boden zugeordneten Saugheber und aufgebrachter Überlaufkappe,

Fig. 5 im vergrößerten Maßstab eine Draufsicht auf einen der im Boden des Filtereinsatzes angeordneten Saugheber bei abgenommener Überlaufkappe,

Fig. 6 in schematischer Darstellung die Anordnung der Verteileinrichtung und der Schnappscheibe, teilweise weggebrochen,

Fig. 7 im Längsschnitt, teilweise weggebrochen, die erfindungsgemäße Verteilerkammer mit der in ihr befindlichen Schnappscheibe, die in ausgeszogenen Linien in ihrer einen Endlage und in strichpunktierten Linien in ihrer anderen Endlage wiedergegeben ist,

Fig. 8 einen Schnitt durch die Verteilerkammer gemäß der Fig. 7 entlang der Linie VIII-VIII,

Fig. 9 in Draufsicht die Rücklaufkammer der Verteilerkammer,

Fig. 10 einen Längsschnitt durch die Rücklaufkammer gemäß der Fig. 9 der Zeichnung,

Fig. 11 einen Schnitt durch die Rücklaufkammer gemäß der Linie XI-XI,

Fig. 12 einen Längsschnitt durch die Vorlaufkammer der erfindungsgemäßen Verteilerkammer gemäß der Fig. 7 der Zeichnung,

Fig. 13 eine Draufsicht auf die Vorlaufkammer gemäß der Fig. 12 der Zeichnung und

Fig. 14 einen Schnitt durch die Vorlaufkammer gemäß der Linie XIV-XIV.

Es sei zunächst erwähnt, daß in den Figuren der Zeichnungen nur diejenigen Teile eines Gerätes zum Bereiten heißer Getränke, wie Kaffee, Tee od.dgl. dargestellt sind, die für das Verständnis der Erfindung Bedeutung haben. So sind z.B. die Steuer-und Regeleinrichtungen und auch die elektrischen Zuführungsleitungen fortgelassen. Alle fehlenden Teile können einen an sich bekannten Aufbau haben und in ebenfalls an sich bekannter Weise wirksam werden.

Dem Ausführungsbeispiel ist eine generell mit 10 bezeichnete Kaffeemaschine zugeordnet. Diese hat eine in der einschlägigen Technik allgemein bekannte Ausbildung. Dies bedeutet, daß die Kaffeemaschine 10 ein hohles Gehäuse hat, dessen Inneres zur Unterbringung von Funktionsteilen der Kaffeemaschnine dient bzw. dessen Wandungen zur Lagerung solcher Teile herangezogen werden. Im gewählten Ausführungsbeispiel hat das Gehäuse im Querschnitt gesehen etwa L-förmige Gestalt, wobei der Querschenkel des L's den Gehäusefuß 11 bildet. Den größere Teil des L's nimmt ein Frischwasserbehälter 12 ein, der im gewählten Ausführungsbeispiel aus einem durchsichtigen Werkstoff gefertigt ist und auf seiner dem Beschauer zugekehrten Seite mit einer Markierung 13 versehen ist, die die Anzahl der Tassen angibt. Im gewählten Ausführungsbeispiel können maximal 10 Tassen Kaffee hergestellt werden. In dem Hohlraum des Gehäusefußes 11 ist eine an sich bekannte elektrische Heizeinrichtung 31 untergebracht. Diese ist in aller Regel als Durchlauferhitzer gestaltet und in bekannter Weise an eine elektrische Versorgungsleitung angeschlossen. In bekannter Weise gelangt das Wasser aus dem Frischwaserbehälter 12 in den Bereich der Heizeinrichtung 31 und wird nach dem Erhitzen über ein Steigrohr 14 nach oben befördert. Am Ende des Steigrohres 14 sitzt eine Verteilerkammer 15. Diese hat in ihrem Inneren eine Schnappscheibe, die abhängig von der Temperatur des sie benetzenden Wassers in zwei unterschiedliche Lagen überführt werden kann. So lange das Wasser noch kalt ist, befindet sich die Schnappscheibe der Verteilerkammer in einer solchen Lage, daß das im Steigrohr 14 aufsteigende Wasser zurück in den Frischwasserbehälter 12 geführt wird. Hat das Wasser, welches im Steigrohr 14 aufsteigt, dagegen die gewünschte Betriebstemperatur erreicht, so verändert die Schnappscheibe schlagartig ihre Lage und gibt damit den Weg frei für eine Verbindung der Verteilerkammer 15 mit einem Querrohr 16, das parallel und im Abstand zum Gehäusefuß 11 angeordnet ist und eine Austrittsöffnung 17 aufweist. Unterhalb der Austrittsöffnung 17 ist am Gehäuse der Kaffeemaschine 10 ein Filter 18 angeordnet, der normalerweise dazu dient, eine Filtertüte aufzunehmen, in welche dann das Kaffeemehl hineingegeben wird, das zum Zubereiten des Heißgetränkes erforderlich ist.

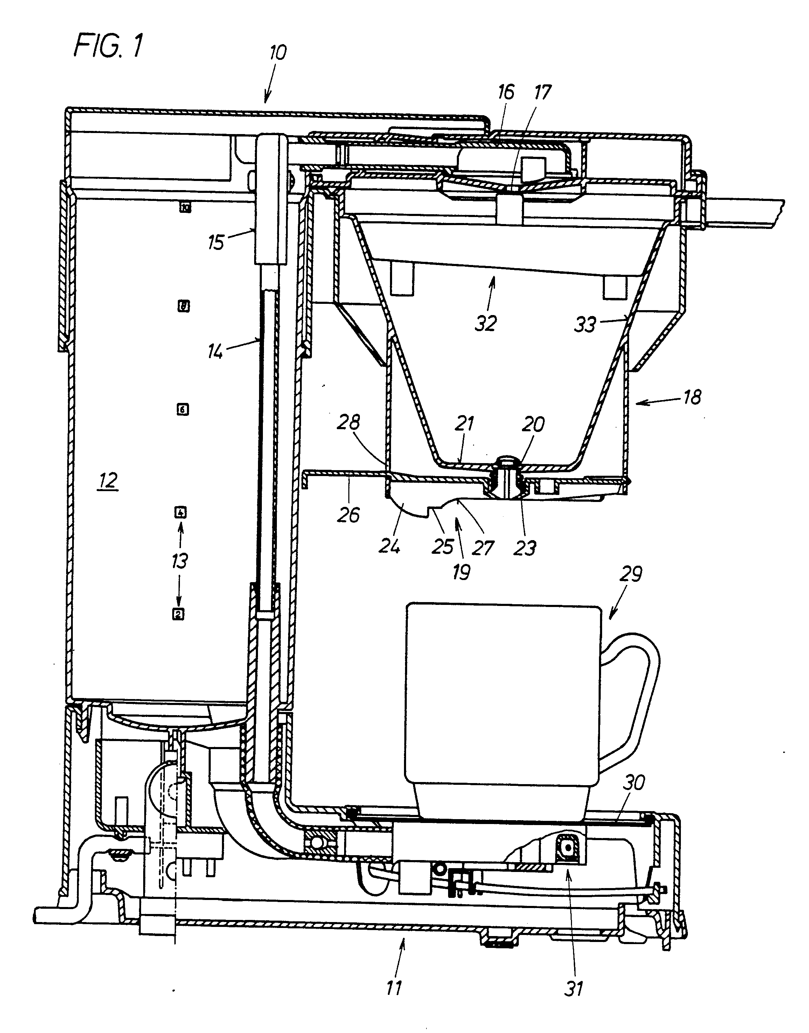

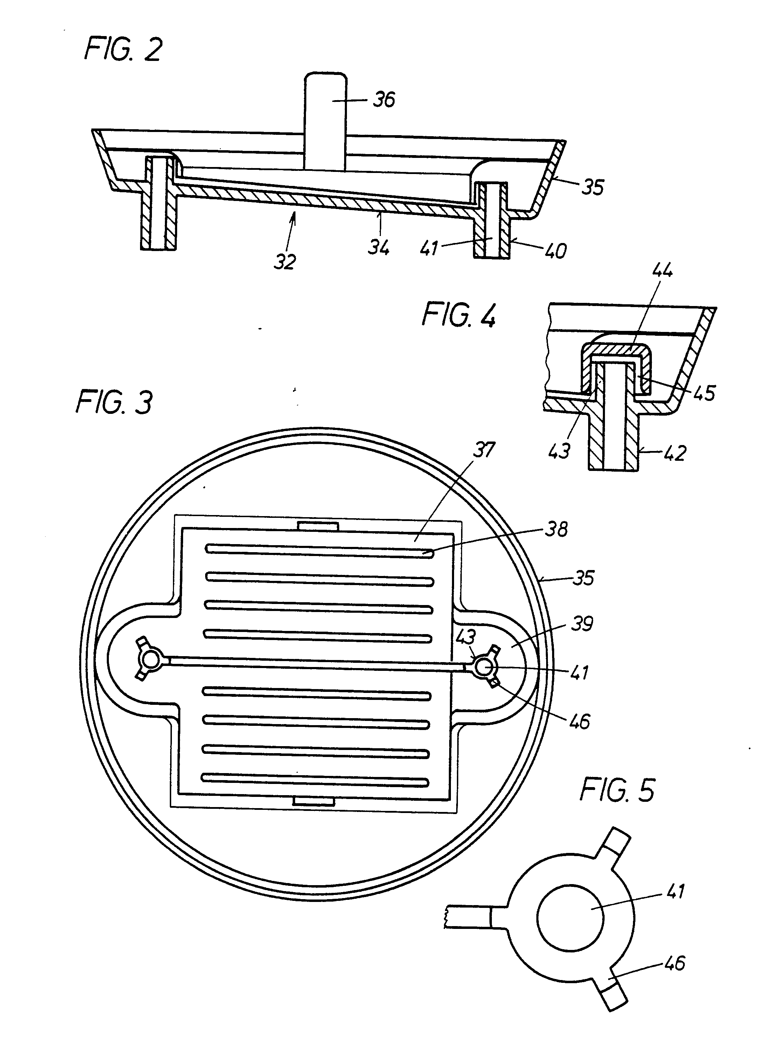

Im dargestellten Ausführungsbeispiel ist jedoch in dem oberen Bereich des Filters 18 ein generell mit 32 bezeichneter Filtereinsatz eingebracht worden, der dann benutzt wird, wenn mit der Kaffeemaschine 10 nur eine geringe Menge eines Heißgetränkes hergestellt werden soll, beispielsweise wenn der Benutzer lediglich eine oder zwei Tassen Kaffee zubereitet haben will. Der Filtereinsatz 32 ist in den Fig. 2 bis 5 der Zeichnungen dargestellt. Daraus ergibt sich, daß es sich um einen Hohlkörper handelt, der aus einem Kunststoff hergestellt ist und einen im wesentlichen geschlossenen Boden 34 aufweist, der nach außen weisende geneigte Umfangsflächen 35 besitzt. Die Neigung der Umfangsflächen 35 entspricht dabei der Neigung der Innenwand 33 des Filters 18. Die Abmessungen des Filtereinsatzes 32 sind dabei so gewählt, daß dieser - wie die Fig. 1 zeigt - im oberen Bereich des Filters 18 zu liegen kommt. Um dabei das Anbringen am oder Widerentfernen des Filtereinsatzes 33 vom Filter zu erleichtern, ist der Filtereinsatz 32 mit angeformten Handgriffen 36 versehen, die laschenartig gestaltet sind. Auf der Innenseite des Bodens 34 befindet sich eine Aufnahme 37, die zur Unterbringung einer Kleinportionspackung von Kaffeemehl dient. Im gewählten Ausführungsbeispiel hat die Aufnahme 37 etwa quadratische Gestalt. Dabei ist vorausgesetzt, daß auch die Kleinportionspackung in Draufsicht gesehen etwa die Form eines quadratischen Körpers aufweist. Hier ist jedoch bei Bedarf ohne weiteres eine Anpassung möglich. Dies bedeutet, daß auch Aufnahmen 37 im Filtereinsatz 32 vorgesehen sein können, die im Querschnitt gesehen anders, z. B. kreisförmig gestaltet sind. Weitere Ausbildungsformen sind ohne weiteres möglich. Der Boden der Aufnahme 37 ist mit Rippen 38 versehen, die im gewählten Ausführungsbeispiel in regelmäßiger Anordnung vorgesehen sind und sich fast über die gesamte Breite des Aufnahmebodens erstrecken.

Auf zwei diametral gegenüberliegenden Seiten hat die Aufnahme 37 je eine Erweiterung 39 von halbkreisförmiger Gestalt. Etwa in der Mitte jeder Erweiterung 39 liegend ist ein generell mit 40 bezeichneter Rohrabschnitt vorgesehen, der den einen Teil eines Saughebers bildet. Dieser Rohrabschnitt 40 wird dabei in seiner Längsrichtung von einer Bohrung 41 durchsetzt.

Der Rohrabschnitt 40, der dem Boden 34 des Filtereinsatzes 32 unmittelbar angeformt ist, besteht aus dem Unterteil 42, welches in den Filter 18 hineinragt und aus dem Oberteil 43, welches in den Freieraum des Filtereinsatzes 32 hineinragt. Auf den Oberteil 43 wird in der in Fig. 1 dargestellten Weise eine Überlaufkappe 44 aufgesteckt und zwar derart, daß einmal ein Ringraum 45 verbleibt und zum anderen, daß der Aufsteckweg der Überlaufkappe 44 begrenzt ist. Dies wird dadurch erreicht, daß die Stirnfläche der Überlaufkappe 44 auf Erhebungen 46 des Bodens 34 auftrifft.

Wie die Fig. 2 der Zeichnung am besten erkennen läßt, ist der Boden 34 des Filtereinsatzes 32 geneigt zur Horizontalen ausgebildet. Aus der gleichen Zeichnungsfigur ist zu ersehen, daß die oberen Eintrittsöffnungen der beiden Saugheber in unterschiedlicher Höhe zu liegen kommen. Daher werden die beiden Saugheber auch zeitlich unterschiedlich wirksam werden. Das aus der Austrittsöffnung 17 des Querrohres 16 austretende heiße Wasser gelangt zunächst zu der in der Aufnahme 37 des Filtereinsatzes liegenden, in der Zeichnung nicht dargestellten Kleinportionspackung, durchnetzt das Kaffeemehl derselben und gelangt dann in den Bereich des Bodens 34. Dort sammelt es sich an. Es kann mit der Zeit hochsteigen und zwar auch in dem Ringspalt 45. In der Endphase wird dann die obere Öffnung der Bohrung 41 erreicht. Ist dies geschehen, dann wird der Saugheber wirksam und es erfolgt in an sich bekannter Weise ein Abführen des im Filtereinsatz 32 befindlichen Heißgetränkes. Dieses gelangt dann zunächst in den Hohlraum des Filters 18. Es wird dort an einem unmittelbaren Abfließen durch die Verschlußeinrichtung 19 gehindert. Diese Verschlußeinrichtung 19 hat einen einseitig gelagerten schwenkbaren Hebel, der etwa in seiner Mitte einen Ventilkörper aufweist, der federbelastet ist. In der in der Fig. 1 dargestellten Lage der Verschlußeinrichtung 19 befindet sich der Verschlußkörper in seiner Schließlage, d.h. der im Boden 21 des Filters 18 in der Mitte angeordnete Auslaß 20 ist abgesperrt. Die Feder 23 drückt nämlich den eigentlichen Verschlußkörper gegen die Begrenzungswandungen des Auslasses 20.

Die Verschlußeinrichtung 19 hat einen verbreiterten Bereich 24 mit einem Anschlag 25, der durch zwei senkrecht zueinander stehende Wandungen begrenzt ist. Diesem Anschlag 25 ist eine Steuerfläche 27 vorgeschaltet.

Normalerweise wird zum Auffangen des fertigen Heißgetränkes ein Krug, wie ein Glaskrung, benutzt, der in seiner Höhe so bemessen ist, daß er unmittelbar unter der Verschlußeinrichtung 19 steht. Beim Anbringen eines solchen Glaskruges wirkt der obere Rand mit der Steuerfläche 27 der Verschlußeinrichtung 19 zusammen und schwenkt diese entgegen der Einwirkung der Feder 23 nach oben und gibt damit den Auslaß 20 frei. Dies geschieht somit erst dann, wenn sich der Auffangkrug bereits unter dem Auslaß befindet.

Da im vorliegenden Falle vorgesehen ist, nur eine geringe Anzahl von Tassen eines Heißgetränkes herzustellen, wird anstelle eines Auffangkruges oder eine Auffangkanne eine Tasse 29 benutzt, die auf der Aufstellfläche 30 des Gehäusefußes 11 steht. Wie aus der Zeichnung ersichtlich, sind die Höhenabmessungen der Tasse 29 derart, daß der obere Rand nicht unmittelbar mit der Steuerfläche 27 der Verschlußeinrichtung in Verbindung kommen kann. Um nun auch bei Verwendung einer solchen Tasse ein Öffnen der Verschlußeinrichtung 19 zu bewerkstelligen, ist der Anschlag 25 vorgesehen. Der Benutzer hebt zum Betätigen der Verschlußeinrichtung 19 die Tasse 29 so weit an, bis der obere Rand derselben mit dem Anschlag 25 zusammenwirkt. Dabei ist es von Vorteil, daß die Begrenzungswandungen des Anschlages senkrecht zueinander stehen, so daß eine definierte Einwirkungs-und Berührungsfläche vorgesehen ist. Durch weiteres Anheben der Tasse 29 entgegen der Einwirkung der Feder 23 erfolgt dann das Anheben der Verschlußeinrichtung 19 und damit das Öffnen des Auslasses 20. Dadurch kann der Kaffee, der sich vorher in dem unteren Teil des Filters 18 gesammelt hat, in einem Zug in den Innenraum der Tasse 29 gelangen. Sobald die Tasse 29 dann aus dem Bereich des Anschlages 25 herauskommt und - wie in der Fig. 1 dargestellt -wieder auf die Aufstellfläche 30 zurückgebracht wird, kann die Feder 23 wirksam werden und dann den Auslaß 20 des Filters 18 schließen.

Daneben ist aber auch eine andere Arbeitsweise zum Öffnen der Verschlußeinrichtung 19 möglich. In diesem Fall kann die Tasse 29, so wie in der Fig. 1 dargestellt, auf der Aufstellfläche 30 verbleiben. Der Benutzer der Kaffeemaschine 10 kann nämlich eine Verlängerung 26 des hebelartigen Verschlusses 19 erfassen und nach oben entgegen der Einwirkung der Feder 23 bewegen. Dadurch wird der Auslaß 20 freigegeben. Die Verlängerung 26 durchgreift dabei einen Längsschlitz 28 der eine Wand des Filters 18. Die Länge des Schlitzes bestimmt dabei den Verschwenkweg der Verlängerung 26. Durch Loslassen der Verlängerung 26 kann auch in diesem Fall die Feder 23 wieder wirksam und der Verschlußkörper der Verschlußeinrichtung in seine unwirksame Lage überführt werden.

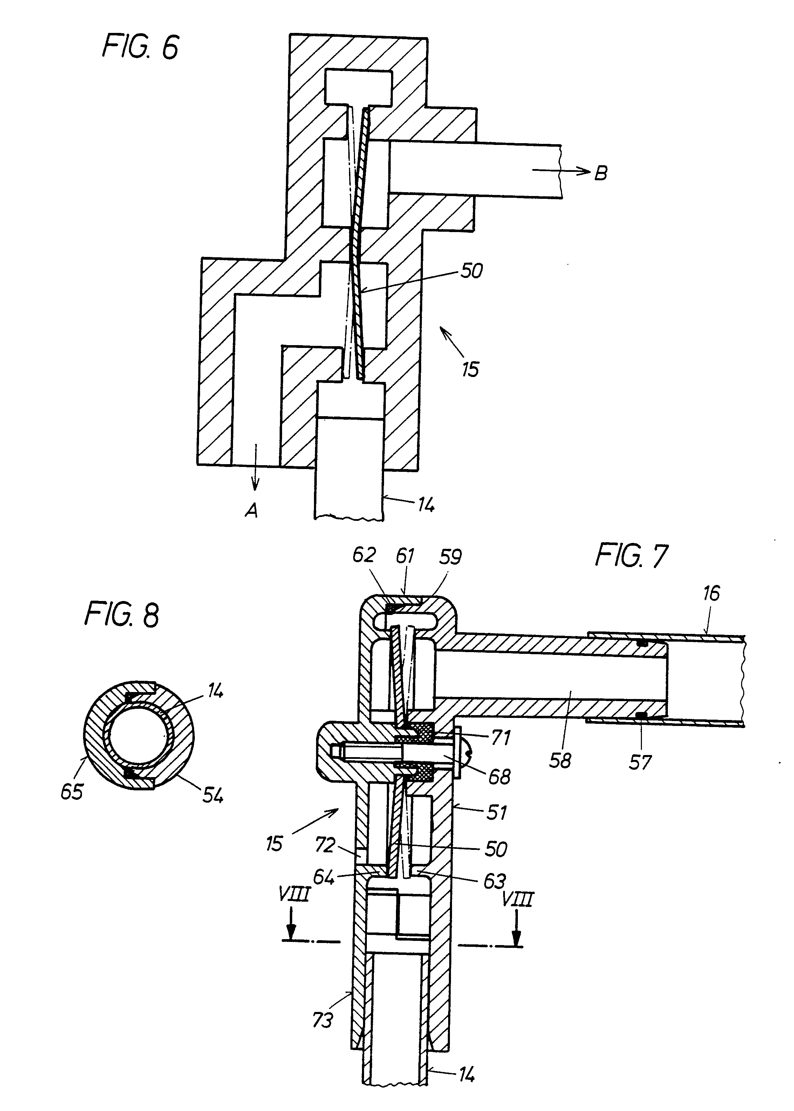

Wie schon erwähnt und wie in der Fig. 1 dargestellt, befindet sich am Ende des Steigrohres 14 eine Verteilerkammer 15. Deren prinzipieller Aufbau ist in der Fig. 6 der Zeichnung wiedergegeben. Daraus ergibt sich, daß im Inneren der Verteilerkammer 15 eine generell mit 50 bezeichnete Schnappscheibe angeordnet ist, derart, daß sie in ihrer Mitte eingespannt ist. Die Schnappscheibe 50 kann die in der Fig. 6 in ausgezongenen Linien dargestellte Sperrlage einnehmen, in der es unmöglich ist, daß das aus dem Steigrohr 14 austretende Wasser in den Bereich des Filters der Kaffeemaschine 10 gelangt.

Vielmehr wird das Wasser in Richtung des Pfeiles A in den Frischwasserbehälter 12 zurückgeführt. Hat dagegen das im Steigrohr 14 hochgeförderte Wasser die Betriebstemperatur erreicht, so springt die Schnappscheibe 50 in die in der Fig. 6 in strichpunktierten Linien wiedergegebene Öffnungslage über, in der ein Weiterströmen des erhitzten Wassers in Richtung des Pfeiles B ermöglicht ist. Dies bedeutet, daß nunmehr das erhitzte Wasser zum Filter und damit zum Kaffeemehl innerhalb des Filters gelangen kann.

Die spezielle Ausführungsform der Verteilerkammer 15 ist in den Fig. 7 bis 14 der Zeichnungen dargestellt. Daraus ergibt sich, daß die Verteilerkammer 15 aus einer Vorlaufkammer 51 und aus einer Rücklaufkammer 52 besteht, die unter Erfassung und Festlegung der Schnappscheibe miteinander verbindbar sind.

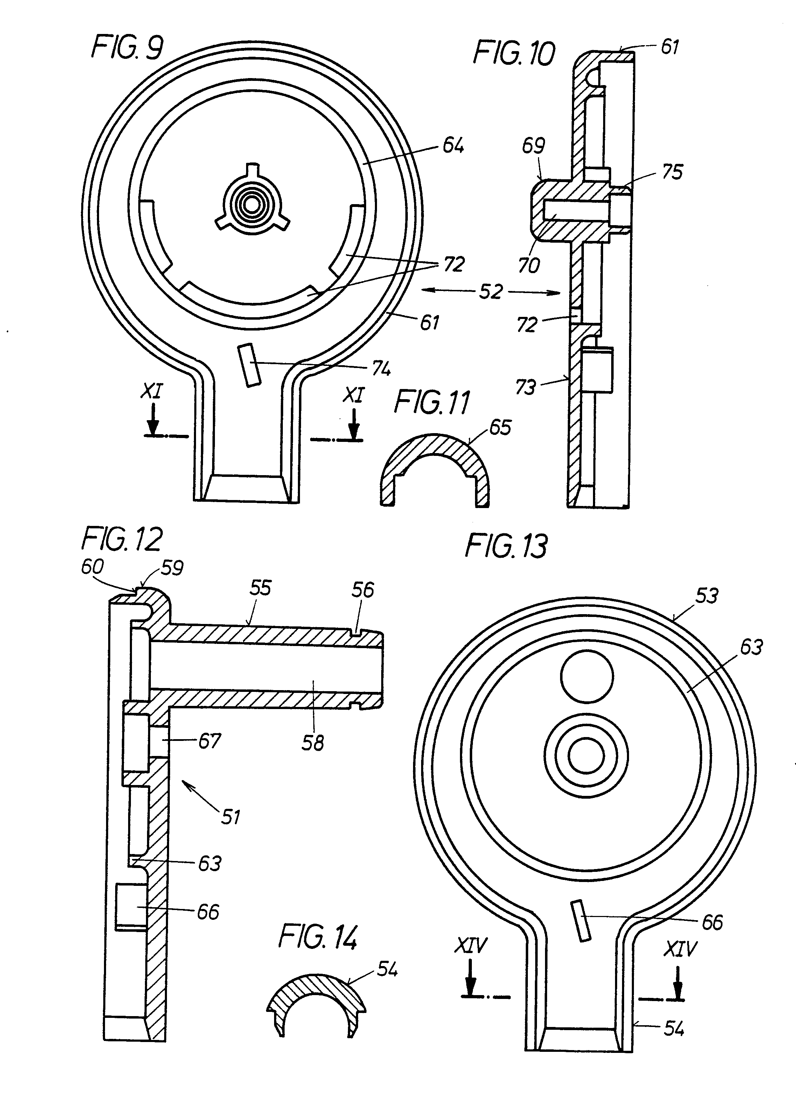

Die in den Fig. 12 bis 14 wiedergegebene Vorlaufkammer ist ein einstückiger Kunststoffkörper mit einem Grundkörper 53 von im wesentlichen kreisförmiger Gestalt. Der Grundkörper 53 hat in seinem oberen Bereich einen quer zur Grundfläche des Grundkörpers 53 liegenden Anschlußstutzen 55 mit einer durchlaufenden Bohrung 58. In Nähe der Stirnfläche des Anschlußstutzens 55 ist an der Außenfläche eine umlaufende Nut 56 vorgesehen, die zur Unterbringung einer Dichtung 57 dient. Das eine freie Ende des Querrohres 16 kann - wie in der Fig. 7 dargestellt ist - das vordere Ende des Anschlußstutzens 55 umgreifen und kommt dabei mit der Dichtung 57 in Wirkverbindung.

Der Grundkörper 53 der Vorlaufkammer 51 ist von einem umlaufenden Rand 59 umgeben, der - vergl. dazu die Fig. 12 der Zeichnung - einen Rücksprung 60 aufweist.

Aus den Fig. 12 und 13 der Zeichnung ergibt sich ferner, daß an der Innenwandung des Grundkörpers 53 liegend ein umlaufender Vorsprung 63 angeformt ist, dessen vordere Stirnfläche als Anschlag für die Schnappscheibe dient und zwar dann, wenn sich die Schnappscheibe 7 in der in Fig. 7 in strichpunktierten Linien wiedergegebenen Lage befindet.

In der Mitte des Vorsprunges 53 liegend hat der Grundkörper 53 einen Durchbruch 67 für eine Verbindungsschraube 68, die die Vorlaufkammer 51 mit der Rücklaufkammer 52 verbindet.

Der Grundkörper 53 der Vorlaufkammer 51 geht - wie aus der Fig. 13 ersichtlich - in einen Halbstutzen 54 über. Der Halbstutzen 54 der Vorlaufkammer 51 wird durch den in Fig. 11 dargestellten anderen Halbstutzen 65 der Rücklaufkammer 52 zu einem Vollstutzen ergänzt, wobei dieser Vollstutzen-wie in Fig. 7 der Zeichnung ersichtlich - das obere Ende des Steigrohres 14 aufnimmt.

Am Ende des Anschlußstutzens 54 ist an der Innenwandung liegend eine Leitwand 66 angeformt, die quer zur Längsrichtung des Halbstutzens 54 liegt.

Die in den Fig. 9 bis 11 wiedergegebene Rücklaufkammer 52 hat im wesentlichen die gleichen Außenabmessungen wie die Vorlaufkammer 51, d.h. auch sie besteht aus einem im wesentlichen kreisförmigen Grundkörper 73 mit einem umlaufenden Rand 51, der mit dem umlaufenden Rand 59 der Vorlaufkammer 51 unter Zwischenschaltung der Dichtung 62 zusammenwirkt.

Der Grundkörper 73 der Rücklaufkammer 52 hat im gewählten Ausführungsbeispiel eine Mehrzahl von Rücklaufdurchbrüchen 72, die konzentrisch zum Mittelpunkt eines umlaufenden Vorsprunges 64 angeordnet sind. Auch der Vorsprung 74 dient als Anschlag für die Schnappscheibe, vergl. dazu die ausgezogene Stellung der Schnappscheibe 50 in der Fig. 7 der Zeichnung.

Es sind unterschiedlich lang gehaltene Rücklaufdurchbrüche 72 im Ausführungsbeispiel gewählt worden, die auf einem Halbkreis liegen, der konzentrisch zum Mittelpunkt des umlaufenden Vorsprunges 64 angeordnet ist.

Die Fig. 9 und 10 der Zeichnung lassen erkennen, daß der Grundkörper 73 der Rücklaufkammer 52 eine Verdickung 69 mit einem Sackloch 70 aufweist. Die Verdickung 69 steht dabei im bezug auf die Grundebene des Grundkörpers 53 sowohl nach außen als auch nach innen vor. An der Stirnfläche der Verdickung 69 ist ein Lager 75 für die Schnappscheibe 50 vorgesehen. Beim Zusammenfügen der beiden Kammern 51 und 52 wird die Schnappscheibe 50 bis zu einem Anschlag auf das Lager 75 geschoben und danach ein Dichtelement 71 aufgebracht. Die beiden Kammern 51 und 52 und die Schnappscheibe 50 werden dabei durch die Verbindungsschraube 68 zusammengehalten, wobei der Schaft der Verbindungsschraube 68 durch einen Durchbruch 67 der Vorlaufkammer hindurchgreift, während das mit Gewinde versehene vordere Teil der Befestigungsschraube mit den Innenwandungen des Sackloches 70 der Verdickung 69 im Sinne eines Festlegens zusammenwirkt.

Auch der Grundkörper 73 der Rücklaufkammer 52 hat einen jetzt mit 65 bezeichneten Halbstutzen. Ferner ist am Ende dieses Halbstutzens auch quer zur Längsrichtung desselben liegend eine Leitwand 74 vorgesehen.

Die Schnappscheibe 50 kann - wie grundsätzlich bekannt - in Abhängigkeit von der Tempertur zwei Lagen einnehmen und zwar einmal die in Fig. 7 in ausgezogenen Linien wiedergegebene Offenlage und die in strichpunktierten linien wiedergegebene Sperrlage. In der zuletzt genannten Sperrlage liegt die Schnappscheibe 50 bereichsweise an den ihr zugekehrten Innenflächen des Vorsprunges 63 an. Dadurch wird das noch nicht auf Betriebstemperatur gekommene Wasser durch die Rücklaufdurchbrüche 72 in den Frischwasserbehälter 12 zurückbefoördert.

Ist dagegen die Betriebstemperatur des Wassers erreicht, dann springt die Schnappscheibe 50 in die in Fig. 7 in ausgezogenen Linien dargestellte Offenlage über, in der nunmehr das aus dem Steigrohr 14 kommende Wasser durch den Anschlußstutzen 55 und zwar durch dessen Bohrung 58 hindurch in das Querrohr 16 und von dort in den Auslaßstutzen 17 gelangen kann. Auf diese Weise wird mit einfachen Mitteln erreicht, daß nur Wasser der gewünschten Betriebstemperatur auf das Kaffeemehl gelangt.

Sofern nur die Zubereitung von einer oder zwei Tassen Kaffee gewünscht wird, wird der Filtereinsatz 32 in dem Filter 18 angebracht. In diesem Falle genügt es auch, eine Tasse 29 zum Auffangen des fertigen Kaffees zu benutzen. Soll dagegen eine größere Menge von Kaffee hergestellt werden, beispielsweise 10 Tassen, so wird der Filtereinsatz 32 aus dem Filter 18 entfernt und in den Filter 18 eine Filtertüte in bekannter Weise eingesetzt und mit der entsprechenden Kaffeemehlmenge versehen. In diesem Falle wird auch anstelle der in der Fig. 1 dargestellten Tasse 29 ein bekannter Krug oder ein anderes Auffanggefäß auf die Aufstellfläche 30 gestellt, wobei in diesem Falle beim Anbringen des Kruges im Zusammenwirken mit seinem oberen Rand und der Steuerfläche 27 ein Öffnen der Verschlußeinrichtung 19 automatisch erfolgt.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dabei sei erwähnt, daß es im Handel Schnappscheiben gibt, die auf unterschiedliche Temperatur ansprechen. Man hat es daher in der Hand, in die Verteilerkammer 15 diejenige Schnappscheibe anzubringen, die ein Durchlassen von Wasser der gewünschten Temperatur ermöglicht. Ferner können die beiden Kammern 51 und 52 eine von der gewählten Darstellung abweichende Ausbildung erhalten und auch in anderer Weise miteinander verbunden werden.

Bezugszeichenliste :

10 - Kaffeemaschine
11 - Gehäusefuß
12 - Frischwasserbehälter
13 - Markierung (an 12)
14 - Steigrohr
15 - Verteilerkammer
16 - Querrohr
17 - Austrittsöffnung
18 - Filter
19 - Verschlußeinrichtung
20 - Auslaß (in 18)
21 - Boden (von 18)
22 - Verschlußkörper
23 - Feder
24 - verbreiterter Bereich (von 19)
25 - Anschlag
26 - Verlängerung
27 - Steuerfläche (an 19)
28 - Durchbruch (für 26)
29 - Tasse (Auffangbehälter)
30 - Aufstellfläche (für 29)
31 - elektrische Heizeinrichtung
32 - Filtereinsatz
33 - Innenwandung (von 18)
34 - Boden (von 32)
35 - Umfangsfläche (von 32)
36 - Handgriff
37 - Aufnahme
38 - Rippen
39 - Erweiterung (von 37)
40 - Rohrabschnitt
41 - Bohrung (von 40)
42 - Unterteil (von 40)
43 - Oberteil (von 40)
44 - Überlaufkappe
45 - Ringspalt
46 - Erhebung
50 - Schnappscheibe
51 - Vorlaufkammer
52 - Rücklaufkammer
53 - Grundkörper (von 51)
54 - Halbstutzen (von 51)
55 - Anschlußstutzen (von 54)
56 - Nut (in 55)
57 - Dichtung (in 56)
58 - Bohrung (von 55)
59 - umlaufender Rand (von 51)
60 - Rücksprung (von 59)
61 - umlaufender Rand (von 52)
62 - Dichtung (zwischen 51 und 52)
63 - umlaufender Vorsprung (von 51)
64 - umlaufender Vorsprung (von 52)
65 - Halbstutzen (von 52)
66 - Anschlag und Leitwand (von 51)
67 - Durchbrechung (in 51)

68 - Verbindungsschraube
69 - Verdickung (an 51)
70 - Sackloch (in 69)
71 - Dichtelement
72 - Rücklaufdurchbruch
73 - Grundkörper (von 52)
74 - Anschlag und Leitwand (von 52)
75 - Lager (für 50)
Pfeil A - Rücklaufrichtung des Wassers bei Sperrlage der Schnappscheibe 50
Pfeil B - Durchlaufrichtung des Wassers bei Offenlage der Schnappscheibe 50

## Ansprüche

1. Gerät zum Bereiten heißer Getränke, wie Kaffee, Tee od.dgl., mit einem Gehäuse zur Unterbringung oder Lagerung eines Frischwasserbehälters, einer elektrischen Heizeinrichtung für das Wasser, einem Steigrohr zum Weiterleiten des erhitzten Wassers, an dessen Ende eine Verteileinrichtung angeordnet ist, die · eine Schnappscheibe aufweist, die selbstätig beim Erreichen der gewünschten Wassertemperatur aus einer das Wasser in den Frischwasserbehälter zurückführenden Sperrlage in eine den Weg zum Filter freigebenden Öffnungslage überführbar ist sowie mit einem Filter und einem darunter angeordneten Auffanggefäß,
**dadurch gekennzeichnet,**
daß die als Verteilerkammer (16) ausgebildete Verteileinrichtung aus einer Vorlaufkammer (51) und einer Rücklaufkammer (52) zusammengesetzt ist, die zwischen sich die in ihrer Mitte eingespannte Schnappscheibe (50) aufnehmen.

2. Gerät nach Anspruch 1, dadurch gekennzeichnet, daß das Verbindungsmittel für Vorlaufkammer (51) und Rücklaufkammer (52) zugleich auch die Schnappscheibe (50) in ihrer Mitte festhält.

3. Gerät nach Anspruch 1 und 2, dadurch gekennzeichnet, daß als Verbindungsmittel eine Verbindungsschraube (68) benutzbar ist, deren Schaft eine Druchbrechung (67) der Vorlaufkammer (51) durchgreift und die mit ihrem freien Ende mit den Begrenzungswandungen eines Sackloches (70) einer Verdickung (69) der Rücklaufkammer (52) zusammenwirkt und daß die Schnappscheibe (50) auf einem Lager (75) an der inneren Stirnfläche der Verdickung (69) angeordnet ist.

4. Gerät nach einem oder mehreren der Ansprüche 1 bis 3, dadurch gekennzeichnet, daß sowohl die Vorlaufkammer (51) als auch die Rücklaufkammer (52) auf ihren einander zugekehrten Innenwandungen je einen umlaufenden Vorsprung (63 bzw. 64) aufweisen, die als Anschläge für benachbarte Wandungen der Schnappscheibe (50) benutzbar sind.

5. Gerät nach einem oder mehreren der vorangehenden Ansprüche, dadurch gekennzeichnet, daß der Grundkörper (53) der Vorlaufkammer (51) einen im wesentlichen umlaufenden Rand (59) mit einem Rücksprung (60) aufweist, in den unter Zwischenschaltung einer Dichtung (62) der umlaufende Rand (61) der Rücklaufkammer (52) eingreift.

6. Gerät nach Anspruch 1, dadurch gekennzeichnet, daß die Rücklaufkammer (52) im Bereich ihres Grundkörpers (73) zum Frischwasserbehälter (12) der Kaffeemaschine (10) hin offene Rücklaufdurchbrüche (72) aufweist, die vorzugsweise konzentrisch zur Verbindungsschraube (68) angeordnet sind.

7. Gerät nach Anspruch 6, gekennzeichnet durch eine Mehrzahl von Rücklaufdurchbrüchen (72), die auf einem Teilkreisbogen um die Verbindungsschraube (68) herum angeordnet sind und vorzugsweise bei gleicher Breite unterschiedlich lang bemessen sind.

8. Gerät nach Anspruch 1, dadurch gekennzeichnet, daß die Vorlaufkammer (51) auf der Außenseite ihres Grundkörpers (53) einen mit einer durchlaufenden Bohrung (58) versehenen Anschlußstutzen (55) aufweist, der unter Zwischenschaltung einer Dichtung (57) mit dem in den Bereich des Filters (18) führenden Querrohr (16) verbindbar ist.

9. Gerät nach einem oder mehreren der vorangehenden Ansprüche, dadurch gekennzeichnet, daß die Vorlaufkammer (51) und die Rücklaufkammer (52) je einen angeformten Halbstutzen (54) bzw. (65) aufweisen, die sich beim Zusammenbau der beiden Kammern (51 bzw. 52) zur Verteilerkammer (15) zu einem Vollstutzen ergänzen, der mit dem freien Ende des Steigrohres (14) verbindbar ist.

10. Gerät nach Anspruch 9, dadurch gekennzeichnet, daß im Endbereich des Halbstutzens (54) bzw. (65) an den Innenwandungen liegend jeweils eine in den Innenraum vorragende und im Bezug auf die Längsachse der Halbstutzen quer gestellte Leitwand (66) bzw. (74) angeordnet ist.

*FIG. 1*

0 287 780

FIG. 2

36

35

34    41    40

32

FIG. 4

44

45

43    42

FIG. 3

37

38

35

39

43

41

46

FIG. 5

41

46

*FIG. 6*

*FIG. 8*

*FIG. 7*

0 287 780

FIG. 9

64

72

52

61

XI    XI

74

FIG. 10

61

69

75

70

72

73

FIG. 11

65

FIG. 12

60  59

55    56

67

58

51

63

66

FIG. 14

54

FIG. 13

53

63

66

XIV    XIV

54